(19) Europäisches Patentamt
European Patent Office
Office européen des brevets

(11) Publication number: **0 132 068 B1**

(12) # EUROPEAN PATENT SPECIFICATION

(45) Date of publication of patent specification: **11.09.91**

(51) Int. Cl.5: **G02F 1/133**, G02F 1/17

(21) Application number: **84304371.2**

(22) Date of filing: **27.06.84**

(54) **Multi-colour display device and process of fabricating same.**

(30) Priority: **19.07.83 JP 131501/83**

(43) Date of publication of application:
**23.01.85 Bulletin 85/04**

(45) Publication of the grant of the patent:
**11.09.91 Bulletin 91/37**

(84) Designated Contracting States:
**CH DE FR GB LI**

(56) References cited:
**DE-A- 3 234 110**
**FR-A- 1 401 301**
**FR-A- 2 107 039**
**GB-A- 866 780**
**GB-A- 1 378 324**

(73) Proprietor: **SEIKO INSTRUMENTS INC.**
**31-1, Kameido 6-chome Koto-ku**
**Tokyo 136(JP)**

(72) Inventor: **Suginoya, Mitsuru**
**Kabushiki Kaisha Daini Seikosha 6-31-1, Kameido**
**Koto-ku Tokyo(JP)**
Inventor: **Iwasa, Koji**
**Kabushiki Kaisha Daini Seikosha 6-31-1, Kameido**
**Koto-ku Tokyo(JP)**
Inventor: **Kamamori, Hitoshi**
**Kabushiki Kaisha Daini Seikosha 6-31-1, Kameido**
**Koto-ku Tokyo(JP)**
Inventor: **Sano, Yutaka**
**Kabushiki Kaisha Daini Seikosha 6-31-1, Kameido**
**Koto-ku Tokyo(JP)**
Inventor: **Terada, Yumiko**
**Kabushiki Kaisha Daini Seikosha 6-31-1, Kameido**
**Koto-ku Tokyo(JP)**

(74) Representative: **Miller, Joseph et al**
**J. MILLER & CO. Lincoln House 296-302 High Holborn**
**London WC1V 7JH(GB)**

EP 0 132 068 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to multi-colour display devices and to processes of fabricating the same.

DE-A-3,234,110 discloses a multi-colour display device comprising: a first substrate; a second substrate spaced apart from said first substrate; a display material serving, in operation, as a light shutter disposed between the first substrate and the second substrate; a plurality of display electrodes provided on the inner surface of said first substrate; a counter electrode provided on the inner surface of said second substrate; and a plurality of different colour filters disposed on said plurality of display electrodes whereby a drive voltage fed to said display electrodes is applied via said colour filters to said display material.

The present invention seeks to provide a convenient process for fabricating a multi-colour display device in which no pattern shift occurs, even when the display electrode pattern is fine, in which many different colours can be used without any special resist printing steps, and which uses durable colour filters so that it is suitable for a low voltage drive.

According to one aspect of the present invention, a multi-colour display device is characterised in that the colour filters contain electro-conductive particles so that there is substantially no drop of the drive voltage at the colour filters.

According to another aspect of the present invention, a multi-colour display device is characterised in that each of the colour filters comprises an electro-deposited layer of a polymer, and in that the layer has electro-conductivity.

According to a further aspect of the present invention there is provided a process fabricating a multi-colour display device comprising the steps of: forming a plurality of display electrodes on a first substrate; selectively forming a colour filter on each display electrode so that the display electrodes have different colours; forming a counter electrode on a surface of a second substrate; and disposing a display material between said first substrate and said second substrate, said display material serving, in operation, as a light shutter controlled by the voltage applied between said display electrode and the counter electrode, characterised by forming said colour filters by electro-depositing a polymer together with colouring matter and electro-conductive particles.

Said electro-conductive particles may be any one or more of tin oxide, indium oxide, antimony oxide, zinc oxide, cadmium oxide, gold, silver and nickel.

Said polymer may have an anionic deposition characteristic and may be electrolytically deposited on said display electrodes by anodic electrolysis. Thus said polymer may be (a) an acrylic resin containing carboxyl groups or (b) a polyester resin containing carboxyl groups these neutralized by alkali and made water-soluble or (c) a mixture of water soluble melamine resin and said acrylic resin or said polyester resin.

Preferably said colouring matter is a dye which is barely soluble or insoluble in water.

The invention is illustrated, merely by way of example, in the accompanying drawings, in which:-

Figure 1 slows schematically, in cross-section, one example of a conventional multi-colour display device; and

Figure 2 is a plan view and a cross-sectional view of one embodiment of a multi-colour display device fabricated by a process according to the present invention.

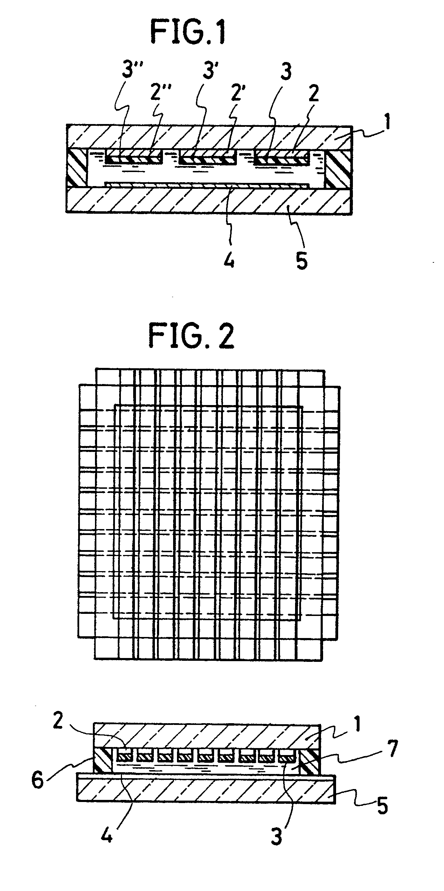

Figure 1 shows one example of a conventional multi-colour display device which makes use of colour filters. The multi-colour display device of Figure 1 has a transparent substrate 1, display electrodes 2,2' ,2" made from a transparent conductive film, colour filters 3,3',3" formed in close contact with the surface of the display electrodes 2,2',2", a transparent counter electrode 4, and a transparent rear substrate 5. The space between the two substrates 1,5 contains a substance, such as a liquid crystal or an electrochromic material which functions as an optical shutter to be opened or closed by the application of a voltage thereto. The colour filters 3,3' ,3" have different colours. Several colours can be displayed by selectively applying a voltage between the display electrodes 2,2' ,2" and the transparent counter electrode 4.

This multiplication of the colours of display using colour filters is very effective in practice because any colour can be easily obtained, and this colour multiplication can be used in combination with various display systems.

However, when fabricating this conventional multi-colour display device, no discrepancy can be allowed between the pattern display electrodes and the pattern of the colour filters formed on the surfaces of the display electrodes. Especially when realising a colour graphic display using a fine pattern in the three primary colours, duplicating the patterns of the display electrodes and the colour filters presents a serious problem which makes the fabrication difficult. Another problem concerns colour change during the formation of the various colours, which complicates the process. In particular, if colouration is effected by dyeing resist printing steps are needed, which make the fabrication process more complex. Parts which have already been dyed should not be dyed again in subsequent dyeing steps. Moreover, the resist printing

technique itself presents problems which must be solved for each dye.

Methods of forming the colour filters that have been considered, generally speaking, use means such as screen printing (DE-A-3234 110) or photolithography. Screen printing does not require any resist, but has limitation concerning size reduction so that positional accuracy becomes worse as the number of colours increases, with resultant discrepancies in the display pattern. Photolithography can produce fine patterns but a photolithographic step is necessary for each colour, and resist printing is also needed to prevent re-dyeing so that the process becomes very complicated and the advantage of convenience is lost.

The colour filters obtained by the above mentioned methods are made of insulating material, and the display device is formed in such a way that a colour filter is sandwiched between a display electrode and the display material. losses in drive voltage are caused by drop in voltage across the colour filters, thus preventing drive at low voltage.

A method of forming colour films by electrodepositing polymers is an important part of a process according to the present invention for fabricating a multi-colour display device and will be described first. One way of electrodepositing polymers onto an electrode is by electrochemically polymerising a monomer on the electrode. An example of this method has been reported in Metal Surface Technology, Vol. 19, No. 12, 1968, by which a variety of vinyl compounds can be electrochemically polymerised on an iron plate to form a polymer film. In recent years, moreover, research has been conducted into methods by which pyrrole or thiophene is electrochemically polymerised to form a conductive polymer such as polypyrrole or polythienylene on an electrode. however, these means for directly polymerizing monomers in an electrochemical manner are not yet efficient in practice. For use in the present invention, there are still problems in that the films obtained are already coloured and that the colouring is not sufficiently varied. In another method of electrodepositng a polymer onto an electrode, the polymer is made insoluble and is deposited onto the electrode from a polymer solution. One example of this method is known in the industry as the so-called "electro-coating" method by which a pigment is dispersed in an aqueous solution of a polymer, and a metal plate is dipped into the solution and is used as an electrode so that a colour layer is electrodeposited onto the electrode. This electro-coating method is used for precoating automotive bodies. The principle of this method involves introducing a hydrophilic group such as a carboxyl group into a polymer, and then neutralizing and making the carboxyl group water-soluble by an inorganic alkali or organic amine. The electrode is dipped into an aqueous solution of this water-soluble polymer and a voltage is applied. The carboxyl anions, dissociated in the aqueous solution, migrate toward the anode and react on the electrode with the protons which are generated by the electrolysis of water, so that the polymer becomes insoluble in water and is deposited. More specifically, the reactions expressed by the following equation occur on the anode so that the polymer deposits thereon:

$$2H_2O \rightarrow 4H^+ + O_2\uparrow + 4e^-$$

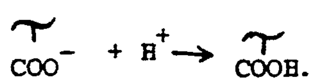 (Deposition)

On the other hand, if a basic group, such as a polyamine, is used as the hydrophilic group and is neutralized and made water-soluble by an acid, a polymer can be deposited upon the cathode.

In this electro-coating method, a film thickness of 10 to 20 µm is usually obtained by applying a voltage of between 100 and 200 v. For a multi-colour display device according to the present invention, however, thinner films are preferable. For this purpose, it is necessary to determine the most suitable polymer concentration, voltage and solvent composition as will be described in the Examples given below. As the polymer for the anionic electrodeposition, an adduct of a natural drying oil and maleic acid, an alkyd resin into which a carboxyl group is introduced, an adduct of an epoxy resin and maleic acid, a polybutadiene resin into which a carboxyl group is introduced, or a copolymer of acrylic or methacrylic acid and its ester can be used. Depending upon the characteristics of the electrodeposited film, another polymer or an organic compound having a functional group may be introduced into the framework of the first polymer. It is required in a multi-colour display device according to the present invention that the colour filters are transparent, and it has been found that a polymer such as an acrylic or polyester resin is suitable for meeting that requirement. Moreover, the quantity of hydrophilic functional groups such as carboxyl or hydroxyl groups in the polymer plays an important role. The electrodeposited film is not sufficiently insoluble and forms an irregular film if there are too many hydrophilic groups. The water solubility during neutralization becomes insufficient if there are too few hydrophilic groups. Water is the main component of

the solvent of the polymer, and it contains as a polymerising solvent, a hydrophilic solvent such as isopropanol, n-butyl alcohol, t-butyl alcohol, methyl "cellosolve", ethyl "Cellosolve", isopropyl "cellosolve", butyl "cellosolve", diethylene glycol methyl ether, diethylene glycol ethyl ether or diacetone alcohol. The type and quantity of the hydrophilic solvent has a strong influence upon the thickness and evenness of the electrodeposited film.

In this colouring method, a pigment is used in the electrocoating operation and the charged pigment is subjected to electrophoresis together with the polymer and is included in the film. To obtain transparent colour filters the obscuring ability possessed by most pigments is not required, and since the number of transparent pigments is limited, a free choice of colours is difficult to obtain.

Therefore, the present invention provides a method of electrodepositing a dye as colouring matter together with a polymer. In order to electrodeposit the dye with the polymer, the dye molecules must be charged and subjected to electrophoresis. With water-soluble dye, the dissociated dye ions have the effect of adding to the supporting electrolyte, which produces increases in the current and film thickness, and irregularities in the film. A dye which is barely soluble or insoluble in water usually coagulates in water, but it has been found that the electrodeposited polymer can act as a kind of soap with hydrophobic and hydrophilic groups, and can exhibit some dispersion of the organic dye molecules so that they can separate into fine particles and be electrodeposited together with the polymer. In this case it is necessary to make the rates of electrodeposition of the dye and the polymer substantially equal to each other. This can be controlled by the composition of the solution.

Electroconductive particles making the electrodeposited colour films conductive are dispersed as charged particles attracted by the polymers in the solution, like the pigment used in the electro-coating method, and are subjected to electrophoresis by the applied voltage so that they are taken into the colour films. The diameter and quantity of the electro-conductive particles strongly influence the electrical resistance and transparency of the colour films. The electro-conductive particles may be tin oxide, indium oxide, antimony oxide, zinc oxide, cadmium oxide, gold, silver and nickel.

Processes for fabricating multi-colour display devices using colour filters will now be specifically described in connection with the following Examples.

EXAMPLE 1

Figures 2 is an embodiment of a multi-colour display device fabricated by a process according to the present invention.

In the following, the process of fabricating the multi-colour display device as shown in Figure 2 will be specifically described.

(1) Patterning Step

A transparent substrate 1 onto which a transparent conductive film of tin oxide is formed by a spray-coating method, is patterned into strips by an etching method to form display electrodes 2.

(2) Electrodepositing Step

Next, paint, i.e. s-Via ED-3000, produced by Shinto Toryo KK, of the following composition:

S-Via ED-3000

| | |
|---|---|
| Water-soluble polyester resin<br>Water-soluble melamine resin | 70% by weight |
| Butyl Cellosolve<br>Ethyl Cellosolve<br>n-butanol | 30% by weight |

is used to prepare an electrodeposition bath of the following composition:

| Substance | Wt. Ratio |
|---|---|
| S-Via ED-3000 | 10 |
| Water | 108 |
| Tin oxide powder | 7 |
| Silver pigment | 3 |
| Methyl Cellosolve | 12 |
| Oil-soluble dye | x |

The oil-soluble dye used is one that is soluble in a hydrophilic solvent and preferably has a metal complex salt structure which has an extremely good light resistance. The oil-soluble dye has a molecular structure that is expressed by the following formula, for example (known under the tradenames Aizen Spilon, Oleosol Fast or the like):

Cr complex salt of 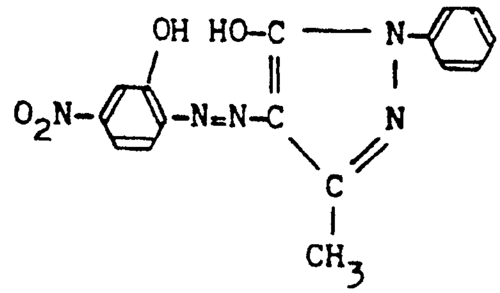

Color Index No. Solvent Red 8.

The procedure for preparing the electrodeposition bath involves adding the tin oxide powder and the silver pigment to the 5-Via ED-3000, and dispersing them to obtain a paste by means of a pigment dispersion mixer. Water is added to that paste and is blended therewith to provide a well-mixed solution.

The dye is then dissolved in the methyl Cellosolve. The weight ratio x of the dye can be any value selected so that it does not exceed the range of solubility of the dye in the methyl Cellosolve. The methyl Cellosolve, in which the dye is dissolved, is added to the first solution so that the dye is uniformly dispersed. The methyl Cellosolve acts as a dispersion medium for the dye, but it would make the film become thicker or irregular if too much of it were added, or if the number of carbon atoms in the alkyl groups of the Cellosolve is increased.

The transparent substrate on which is formed the display electrodes 2 is dipped into the electrodeposition bath thus prepared. Those display electrodes which are to be dyed the same colour are selected, and used as anodes to which a voltage of 20 v is applied for 3 minutes. After this, the transparent substrate 1 is pulled out and well rinsed to wash away the solution which adheres to those display electrodes to which no voltage was supplied. After this rinsing operation, the transparent substrate 1 is dried, leaving very transparent colour films formed over the display electrodes to which the voltage was applied.

(3) Hardening Step

Next, the polyester resin and the melamine resin in the electrodeposited colour films formed are baked and set by a condensation reaction. If the baking is conducted in air at 175°c for 30 minutes, the colour films are completely hardened. These hardened colour films will not be re-dyed, even if they are dipped into the electrodeposition bath again. Therefore, second or subsequent formations of colour films are conducted by again selecting display electrodes to be dyed the same colour, and repeating the electrodeposition and hardening steps with an electrodeposition bath in which a dye of a different colour has been dispersed.

In the present example, colour filters 3 of red, blue and green in 200 $\mu m$ strips are formed very conveniently by a process consisting of a patterning step, an electrodepositing step for a red film, a

hardening step, an electrodepositing step for a blue film, a hardening step, an electrodepositing step for a green film, and a final hardening step. The colour filter thus fabricated has no colour deterioration and has uniform characteristics that are resistant to attack by acids, alkalis, a variety of organic solvents, and hot water. Moreover, the dye of the metal complex salts used in the colour films is very stable, and has an excellent light-resistance such-that at least 95% of the initial light absorption after a carbon arc test of 360 hours is achieved.

Using the method thus far described, the colour filters 3 are formed on the display electrodes 2 and the transparent substrate 1 is integrated to form a cell with a spacer 6 and a transparent rear substrate 5 on which transparent counter electrodes 4 are formed in strips so that the strips of the display electrodes 2 and of the counter electrode 4 intersect at right angles. The cell is filled with TN-FEM (twisted nematic - field effect mode) liquid crystal material to provide the display material 7, thus completing the multi-colour liquid crystal display device. In this case, a voltage is applied between the display electrodes 2 and the counter electrodes 4 and the multi-colour liquid crystal dislay device is sandwiched between a pair of polarizers which have parallel axes of transmission. The colour of the colour filter 3 can be seen if observed from the side of the transparent substrate 1 or the side of the rear substrate 5, and go black is the applied voltage is removed. When light is shone thereon from the direction of the rear substrate 5, the colours of the colour filters 3 are more effectively displayed because the multi-colour liquid crystal display device is so transparent.

Because of the electrical conductivity imparted to the colour filters, the voltage-transmissivity characteristics of the electro-optical characteristics of a multi-colour display device of the present example were found to be substantially equal to those of the liquid crystal material used therein.

Thus, the process of fabricating a multi-colour display device of this example has been found to be suitable for providing a multi-colour filter with a fine pattern without any reduction in display quality and the process is simple and convenient. Moreover, a colourgraphic display is achieved which can be driven by a very reliable low voltage matrix.

EXAMPLE 2

The display material 7 of Example 1 was replaced with a negative guest-host liquid crystal material using a black dichromatic dyestuff, and the substrate 1 was made of a white material (e g. white ceramic). Otherwise this multi-colour display device was fabricated in the same way as in Example 1. In this case, when a voltage was applied between the display electrodes 2 and the counter electrode 4 and the display was observed from the side of the rear substrate 5 through a polarizing plate, the colours of the colour filters 3 were displayed brightly. If the voltage was removed, the display was black, or the colour of the dichromatic dyestuff thereof. Effects similar to those of Example 1 were obtained by this Example.

EXAMPLE 3

The display material 7 of Example 1 was replaced by a DSM liquid crystal material, and the substrate 1 was patterned with aluminium by mask evaporation to form the display electrodes 2. Otherwise this multi-colour display device was fabricated in the same way as in Example 1. In this case, when a voltage was applied between the display electrodes 2 and the counter electrode 4, and the display was observed from the side of the rear substrate 5, the DSM liquid crystal material achieved a light-scattering state so that the colours of the colour filters 3 were displayed against opaque white. When the voltage was interrupted, the light-scattering state disappeared so that the DSM liquid crystal material became dark in colour. Incidentally, in order efficiently to establish the light-scattering state of DSM liquid crystal material, it was necessary to pass an ion current to some extent, but the high resistance of the colour filters 3 hindered this. By providing extra transparent electrodes on the colour filters, and by using them as the voltage applying electrodes, therefore, the drive voltage could be reduced, and effects similar to those of Example 1 could still be obtained.

EXAMPLE 4

The electrodeposition bath of Example 1 was replaced by one containing a paint, POWERMITE 3000-10, produced by Nippon Paint KK, of the following composition:

POWERMITE 3000-10

| | |
|---|---|
| Water-soluble acrylic resin<br>Water-soluble melamine resin | 60% by weight |
| Butyl Cellosolve<br>Isopropyl alcohol | 40% by weight |

The electrodeposition bath had the composition:

| Substance | Wt. Ratio |
|---|---|
| POWERMITE 3000-10 | 10 |
| Water | 113 |
| Indium oxide powder | 5 |
| Nickel powder | 2 |
| Ethylene glycol | 20 |
| Dispersion dye | x |

The dispersion dyes used are available on the market and frequently contain an anionic dispersant, which would be ionised in the electrodeposition bath to cause current to increase. Therefore, it is preferable that the dispersion dye contains no dispersant.

The electrodeposition bath was made up by adding indium oxide and nickel powder to the POWERMITE 3000-10, and dispersing them by means of a pigment dispersion mixer to provide a paste. Water was added to this paste and blended to form a solution. The dispersion dye was then dispersed uniformly in ethylene glycol within a range of $x < 1.5$, and was added to and mixed with the first solution.

In the same way as in Example 1, a multi-colour liquid crystal display device was fabricated, and effects similar to those of Example 1 were obtained. It was, however, found that only a limited number of dyes could be used as the dispersion dye of a metal complex salt to provide good light resistance characteristics of the colour filters.

## EXAMPLE 5

The electrodeposition bath of Example 5 was changed so that it had the following composition:

| Substance | Wt. Ratio |
|---|---|
| S-Via ED-3000 | 20 |
| Water | 105 |
| Tin oxide powder | 10 |
| Indium oxide powder | 5 |
| Oil-soluble dye | x |

This electrodeposition bath was made up by adding tin oxide powder and indium oxide powder to the s-Via ED-3000, and the oil-soluble dye was then added within a range of $x < 1.0$. These were mixed by a dispersion mixer to provide a paste. Water was then added to the paste, and the mixture was blended to form the electrodeposition bath. A multi-colour display device was fabricated similar to that of Example 1, and effects similar to those of Example 1 were obtained.

It is quite obvious that the oil-soluble dye used in the present example need not be limited to one that is soluble in a hydrophilic solvent, but it should preferably have good light resistance.

As has been specifically described hereinbefore in the examples, a process of fabricating a multi-colour

display device according to the present invention is so simple and convenient that it can provide colour filters without the use of any special resist printing means for separating the colours. Moreover, the colour filters are strong and have not pattern distortion, so that they can provide a high display quality and reliability, even if they are combined with a display material such as a liquid crystal material. Since the colour filters are conductive, moreover, the multi-colour display devices fabricated by this process have only small losses in the drive voltage, so that they can be driven at a low voltage.

## Claims

1. A multi-colour display device comprising: a first substrate (1); a second substrate (5) spaced apart from said first substrate (1); a display material (7) Serving, in operation, as a light shutter disposed between the first substrate (1) and the second substrate (5); a plurality of display electrodes (2) provided on the inner surface of said first substrate (1); a counter electrode (4) provided on the inner surface of said second substrate (5); and a plurality of different colour filters (3) disposed on said plurality of display electrodes (2) whereby a drive voltage fed to said display electrodes (2) is applied via said colour filters (3) to said display material (7) characterised in that the colour filters (3) contain electro-conductive particles so that there is substantially no drop of the drive voltage at the colour filters.

2. A multi-colour display device comprising: a first substrate (1); a second substrate (5) spaced apart from said first substrate (1); a display material (7) serving, in operation, as a light shutter disposed between the first substrate (1) and the second substrate (5); a plurality of display electrodes (2) provided on the inner surface of said first substrate (1); a counter electrode (4) provided on the inner surface of said second substrate (5); and a plurality of different colour filters (3) disposed on said plurality of display electrodes (2) whereby a drive voltage fed to said display electrodes (2) is applied via said colour filters (3) to said display material (7) characterised in that each of the colour filters comprises an electro-deposited layer of a polymer, and in that the layer has electro-conductivity.

3. A multi-colour display device as claimed in claim 2, characterised in that the layer contains electro-conductive particles.

4. A process of fabricating a multi-colour display device comprising the steps of: forming a plurality of display electrodes (2) on a first substrate (1); selectively forming a colour filter (3) on each display electrode (2) so that the display electrodes (2) have different colours; forming a counter electrode (4) on a surface of a second substrate (5); and disposing a display material (7) between said first substrate (1) and said second substrate (5), said display material (7) serving, in operation, as a light shutter controlled by the voltage applied between said display electrode (2) and the counter electrode (4), characterised by forming said colour filters by electro-depositing a polymer together with colouring matter and electro-conductive particles.

5. A process as claimed in claim 4, characterised in that said electro-conductive particles are any one or more of tin oxide, indium oxide, antimony oxide, zinc oxide, cadmium oxide, gold, silver and nickel.

6. A process as claimed in claim 4 or 5 characterised in that said polymer has an anionic deposition characteristic and is electrolytically deposited on said display electrodes by anodic electrolysis.

7. A process as claimed in claim 6 characterised in that said polymer is (a) an acrylic resin containing carboxyl groups, or (b) a polyester resin containing carboxyl groups these neutralised by alkali and made water soluble or (c) a mixture of water soluble melamine resin and said acrylic resin or said polyester resin.

8. A process as claimed in any of claims 4 to 7 characterised in that said colouring matter is a dye which is barely soluble or insoluble in water.

## Revendications

1. Dispositif de visualisation en couleurs comprenent : un premier substrat (1); un second substrat (5) distant du premier substrat (1); un matériau de visualisation (7) qui, pendant le fonctionnement, remplit la fonction d'un obturateur pour la lumière, disposé entre le premier substrat (1) et le second substrat

(5); un ensemble d'électrodes de visualisation (2) formées sur la surface intérieure du premier substrat (1); une contre-électrode (4) formée sur la surface intérieure du second substrat (5); et un ensemble de filtres de différentes couleurs (3) placés sur l'ensemble d'électrodes de visualisation (2), grâce à quoi une tension d'attaque appliquée aux électrodes de visualisation (2) est appliquée par l'intermédiaire des filtres de couleurs (3) au matériau de visualisation (7), caractérisé en ce que les filtres de couleurs (3) contiennent des particules conductrices de l'électricité, de façon qu'il n'y ait pratiquement aucune chute de la tension d'attaque dans les filtres de couleurs.

2. Un dispositif de visualisation en couleurs comprenant : un premier substrat (1); un second substrat (5) distant du premier substrat (1); un matériau de visualisation (7) qui, pendant le fonctionnement, remplit la fonction d'un obturateur de lumière disposé entre le premier substrat (1) et le second substrat (5); un ensemble d'électrodes de visualisation (2) formées sur la surface intérieure du premier substrat (1); une contre-électrode (4) formée sur la surface intérieure du second substrat (5); et un ensemble de filtres de différentes couleurs (3) disposés sur l'ensemble d'électrodes de visualisation (2), grâce à quoi une tension d'attaque qui est appliquée aux électrodes de visualisation (2) est appliquée au matériau de visualisation (7) par l'intermédiaire des filtres de couleurs (3), caractérisé en ce que chacun des filtres de couleurs comporte une couche d'un polymère, formée par électrodéposition, et en ce que cette couche est conductrice de l'électricité.

3. Un dispositif de visualisation en couleurs selon la revendication 2, caractérisé en ce que la couche contient des particules conductrices de l'électricité.

4. Un procédé de fabrication d'un dispositif de visualisation en couleurs comprenant les étapes suivantes : on forme un ensemble d'électrodes de visualisation (2) sur un premier substrat (1); on forme sélectivement un filtre de couleur (3) sur chaque électrode de visualisation (2), de façon que les électrodes de visualisation (2) aient des couleurs différentes; on forme une contre-électrode (4) sur une surface d'un second substrat (5); et on dispose un matériau de visualisation (7) entre le premier substrat (1) et le second substrat (5), ce matériau de visualisation (7) constituant, pendant le fonctionnement, un obturateur de lumière qui est commandé par la tension appliquée entre l'électrode de visualisation (2) et la contre-électrode (4), caractérisé en ce qu'on forme les filtres de couleur en déposant par des moyens électriques un polymère conjointement à une matière colorante et des particules conductrices de l'électricité.

5. Un procédé selon la revendication 4, caractérisé en ce que les particules conductrices de l'électricité sont constituées par une ou plusieurs des matières suivantes : oxyde d'étain, oxyde d'indium, oxyde d'antimoine, oxyde de zinc, oxyde de cadmium, or, argent et nickel.

6. Un procédé selon la revendication 4 ou 5, caractérisé en ce que le polymère a une caractéristique de dépôt anionique et il est déposé de manière électrolytique sur les électrodes de visualisation, par électrolyse anodique.

7. Un procédé selon la revendication 6, caractérisé en ce que le polymère est (a) une résine acrylique contenant des groupes carboxyle , ou (b) une résine de polyester contenant des groupes carboxyle neutralisés par un alcali et rendus solubles dans l'eau, ou (c) un mélange de résine de mélamine soluble dans l'eau et de la résine acrylique précitée ou de la résine de polyester précitée.

8. Un procédé selon l'une quelconque des revendications 4 à 7, caractérisé en ce que la matière colorante est un colorant qui est peu soluble ou insoluble dans l'eau.

**Patentansprüche**

1. Mehrfarben-Anzeigeanordnung mit einem ersten Substrat (1), einem zweiten vom ersten Substrat (1) beabstandeten Substrat (5), einem Anzeigematerial (7), das zwischen dem ersten Substrat (1) und dem zweiten Substrat (5) angeordnet ist und als Lichtverschluß arbeitet, einer Vielzahl von auf der Innenfläche des ersten Substrats (1) vorgesehenen Anzeigeelektroden (2), einer auf der Innenfläche des zweiten Substrats (5) vorgesehenen Gegenelektrode (4) und einer Vielzahl von auf der Vielzahl von Anzeigeelektroden (2) angeordneten unterschiedlichen Farbfiltern (3), wodurch eine an die Anzeigeelektroden (2) angelegte Treiberspannung über die Farbfilter (3) an das Anzeigematerial (7) angelegt wird,

**dadurch gekennzeichnet,** daß die Farbfilter (3) elektrisch leitende Partikel enthalten, so daß im wesentlichen kein Abfall der Treiberspannung an den Farbfiltern auftritt.

2. Mehrfarben-Anzeigeanordnung mit einem ersten Substrat (1), einem zweiten vom ersten Substrat (1) beabstandeten Substrat (5), einem Anzeigematerial (7), das zwischen dem ersten Substrat (1) und dem zweiten Substrat (5) angeordnet ist und als Lichtverschluß arbeitet, einer Vielzahl von auf der Innenfläche des ersten Substrats (1) vorgesehenen Anzeigeelektroden (2), einer auf der Innenfläche des zweiten Substrats (5) vorgesehenen Gegenelektrode (4) und einer Vielzahl von auf der Vielzahl von Anzeigeelektroden (2) angeordneten unterschiedlichen Farbfiltern (3), wodurch eine an die Anzeigeelektroden (2) angelegte Treiberspannung über die Farbfilter (3) an das Anzeigematerial (7) angelegt wird, **dadurch gekennzeichnet,** daß die Farbfilter jeweils eine elektrolytisch abgeschiedene Schicht aus einem Polymer umfassen und daß die Schicht elektrisch leitfähig ist.

3. Mehrfarben-Anordnung nach Anspruch 2, **dadurch gekennzeichnet,** daß die Schicht elektrisch leitende Partikel enthält.

4. Verfahren zur Herstellung einer Mehrfarben-Anzeigeanordnung mit folgenden Schritten: Ausbildung einer Vielzahl von Anzeigelektroden (2) auf einem ersten Substrat (1), selektive Ausbildung eines Farbfilters (3) auf jeder Anzeigeelektrode (2), so daß die Anzeigeelektroden (2) unterschiedliche Farben besitzen, Ausbilden einer Gegenelektrode (4) auf einer Fläche eines zweiten Substrats (5) und Anordnen eines Anzeigematerials (7) zwischen dem ersten Substrat (1) und dem zweiten Substrat (5), das als Lichtverschluß wirkt, der durch eine zwischen die Anzeigeelektrode (2) und die Gegenelektrode (4) angelegte Spannung gesteuert wird, **dadurch gekennzeichnet,** daß die Farbfilter durch elektrolytische Abscheidung eines Polymers zusammen mit einem Färbemittel und elektrisch leitenden Partikeln gebildet werden.

5. Verfahren nach Anspruch 4, **dadurch gekennzeichnet,** daß für die elektrisch leitenden Partikel einer oder mehrere der folgenden Stoffe gewählt wird: Zinnoxid, Indiumoxid, Antimonoxid, Zinkoxid, Kadmiumoxid, Gold, Silber und Nickel.

6. Verfahren nach Anspruch 4 oder 5, **dadurch gekennzeichnet,** daß das Polymer eine anionische Abscheidungseigenschaft besitzt und durch anodische Elektrolyse elektrolytisch auf den Anzeigeelektroden abgeschieden wird.

7. Verfahren nach Anspruch 6, **dadurch gekennzeichnet,** daß das Polymer (a) ein Karboxylgruppen enthaltendes Acrylharz, (b) ein Karboxylgruppen enthaltendes Polyesterharz, wobei die Karboxylgruppen durch Alkali neutralisiert und wasserlöslich gemacht sind oder (c) eine Mischung aus wasserlöslichem Malaminharz und Acrylharz oder Polyesterharz ist.

8. Verfahren nach den Ansprüchen 4 bis 7, **dadurch gekennzeichnet,** daß das Färbemittel ein Farbstoff ist, der in Wasser rein löslich oder unlöslich ist.

FIG.1

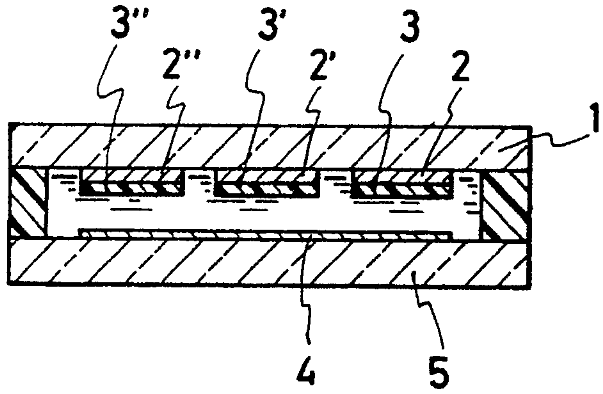


FIG. 2